# EUROPÄISCHE PATENTSCHRIFT

(11) **EP 3 377 779 B1**
(45) Veröffentlichungstag und Bekanntmachung des Hinweises auf die Patenterteilung: **04.12.2019**
(21) Anmeldenummer: 16800882.9
(22) Anmeldetag: 15.11.2016
(51) Int. Cl.: F16B 47/00

(54) **SAUGNAPF MIT EINER SCHNAPPSCHEIBE**
SUCTION CUP WITH A SNAP-ACTION DISK
VENTOUSE COMPRENANT UN DISQUE À DECLIC

(30) Priorität: 21.11.2015 DE 102015015114
(43) Veröffentlichungstag der Anmeldung: 26.09.2018
(73) Patentinhaber: Thomas, Götz, 25524 Itzehoe (DE)
(72) Erfinder: Thomas, Götz, 25524 Itzehoe (DE)
(86) Internationale Anmeldenummer: PCT/EP2016/001903
(87) Internationale Veröffentlichungsnummer: WO 2017/084751

(56) Entgegenhaltungen:
- WO-A1-2015/077658
- DE-B3-102009 004 975

## Beschreibung

Die Erfindung betrifft einen Saugnapf zur lösbaren Befestigung an einem Untergrund, wobei der Saugnapf ein nachgiebiges Dichtungsmaterial zur Anlage gegen den Untergrund und einen elastisch verformbaren Betätigungsteil zum Anpressen gegen den Untergrund umfasst und eine elastische Rückverformung des Betätigungsteils zur Erzeugung eines Unterdrucks zwischen dem Saugnapf und dem Untergrund ausnutzt.

Saugnäpfe der eingangs genannten Art werden seit langem zur lösbaren Befestigung von Gegenständen an Oberflächen von luftundurchlässigen Untergründen, wie z.B. Fliesen benutzt, indem der Saugnapf mit dem Dichtungsmaterial entlang einer ringförmigen Anlagefläche gegen den Untergrund angelegt und dann der Betätigungsteil in der Mitte des Saugnapfs unter Verformung gegen den Untergrund angepresst wird, um die Luft zwischen dem Saugnapf und dem Untergrund zu verdrängen. Bei Entlastung der Anpresskraft erfolgt eine teilweise elastische Rückverformung des Betätigungsteils, wobei zwischen dem Saugnapf und dem Untergrund ein Unterdruck erzeugt wird, der den Saugnapf anschließend gegen den Untergrund anpresst.

Bei vielen im Handel befindlichen preiswerten Saugnäpfen dieser Art sind der elastisch verformbare Betätigungsteil und das nachgiebige Dichtungsmaterial in einem einzigen Formkörper aus Weich-PVC integriert. Diese Saugnäpfe sind zwar sehr preiswert, haften jedoch nur auf sehr glatten ebenen Untergründen und besitzen ein ästhetisch wenig ansprechendes Erscheinungsbild.

Um die Haftung am Untergrund zu verbessern, wurden bereits Saugnäpfe der eingangs genannten Art vorgeschlagen, bei denen der elastisch verformbare Betätigungsteil aus einem Material besteht, dessen Elastizität wesentlich größer als diejenige des nachgiebigen Dichtungsmaterials ist. Dadurch können einerseits die Rückstellkräfte vergrößert werden, welche die elastische Rückverformung bewirken, und andererseits das Dichtungsmaterial nachgiebiger gemacht werden, um eine bessere Anpassung an Unebenheiten des Untergrundes zu ermöglichen. Beispiele von derartigen Saugnäpfen finden sich zum Beispiel in der US-A-5 133 524, der US-A-6 143 391 und der US-A-8 251 323.

Aus der WO 2015/077658 A1 ist ein Saugnapf mit einer gewölbten Feder bekannt, die bei der Anbringung an einem Untergrund aus einem in Bezug zum Untergrund konkaven, d.h. zum Untergrund hin gewölbten Zustand in einen in Bezug zum Untergrund konvexen, d.h. vom Untergrund weg gewölbten Zustand verformt wird, indem eine Anpresskraft auf einen die Feder umgebenden ringförmigen Betätigungsteil ausgeübt wird. Dabei wird ein Dichtungsmaterial zwischen der Feder und dem Untergrund verformt, wobei zwischen dem Dichtungsmaterial und dem Untergrund ein Unterdruck erzeugt wird. Da sowohl der ringförmige Betätigungsteil als auch das Dichtungsmaterial eine gewisse Mindestdicke aufweisen müssen, kann der Saugnapf nicht ganz flach ausgebildet werden. Außerdem besteht der Saugnapf aus mehreren Teilen, wodurch die Kosten für seine Herstellung steigen.

Ausgehend hiervon liegt der Erfindung die Aufgabe zugrunde, einen Saugnapf der eingangs genannten Art dahingehend zu verbessern, dass er sich mit einem ästhetisch ansprechenden Erscheinungsbild, zum Beispiel einer vom Untergrund abgewandten Sicht- oder Vorderseite aus Edelstahl, einer sehr geringen Dicke und einem guten Haftvermögen auch auf nicht ganz glatten Untergründen preiswert fertigen lässt.

Diese Aufgabe wird erfindungsgemäß dadurch gelöst, dass der Betätigungsteil eine Schnappscheibe umfasst, deren vom Dichtungsmaterial abgewandte Vorder- oder Sichtseite in einem stabilen Ruhezustand mindestens teilweise konvex gewölbt ist, die sich durch eine auf die Vorder- oder Sichtseite ausgeübte Druckkraft mindestens teilweise in einen metastabilen oder instabilen Verformungszustand verformen lässt, in dem ihre Vorder- oder Sichtseite mindestens teilweise konkav gewölbt ist, und die sich bei Entlastung der Druckkraft selbsttätig in Richtung des Ruhezustands zurückverformt.

Während zur Verformung der gewölbten runden Blattfeder gemäß WO 2015/077658 A1 zwischen einem stabilen konvex gewölbten Zustand und einem stabilen konkav gewölbten Zustand in jeder Verformungsrichtung eine Kraft aufgebracht werden muss, um die Blattfeder in einen bistabilen allgemein ebenen Zwischenzustand in der Mitte zwischen den zwei stabilen Zuständen zu verformen, aus dem sie dann unter Energiefreisetzung in den jeweils entgegengesetzten stabilen Zustand schnellt, ist dies bei Schnappscheiben nicht der Fall. Dort braucht nur zur Verformung aus dem stabilen Ruhezustand in den instabilen oder metastabilen Verformungszustand eine Druckkraft auf die Schnappscheibe aufgebracht werden. Hingegen erfolgt die Rückverformung in den stabilen Ruhezustand selbsttätig, ohne dass eine Kraft aufgebracht werden braucht. Stattdessen wird zur Rückverformung die in der Schnappscheibe gespeicherte Verformungsenergie ausgenutzt.

Die erfindungsgemäßen Merkmale gestatten es, den Saugnapf zur Befestigung an einem Untergrund im Ruhezustand gegen den Untergrund anzulegen, wobei das Dichtungsmaterial aufgrund der konvexen Wölbung der Sicht- oder Vorderseite der Schnappscheibe nur entlang eines äußeren Umfangs des Saugnapfs oder der Schnappscheibe ringförmig gegen den Untergrund anliegt. Wenn in diesem Zustand von der Vorder- oder Sichtseite her auf die Mitte der Schnappscheibe eine ausreichend große Anpresskraft aufgebracht wird, wird die Schnappscheibe teilweise aus dem stabilen Ruhezustand in den metastabilen oder instabilen Verformungszustand verformt, bis das Dichtungsmaterial im Wesentlichen vollflächig gegen den Untergrund anliegt. Dabei wird in der Schnappscheibe Verformungsenergie gespeichert. Bei einer geeigneten Dimensionierung der Schnappscheibe ist die gespeicherte Verformungsenergie bzw. die elastische Rückstellkraft groß genug, um nach Entlastung der Anpresskraft trotz der Druckdifferenz zwischen dem auf die Sicht- oder Vorderseite einwirkenden Umgebungsdruck und dem zwischen dem Untergrund und der Rückseite erzeugten Unterdruck eine selbsttätige Rückverformung der Schnappscheibe aus dem instabilen oder meta-stabilen Verformungszustand in Richtung des Ruhezustands zu bewirken. Sobald die Schnappscheibe den Verformungszustand verlässt, wird das Dichtungsmaterial in der Mitte hinter der Schnappscheibe vom Untergrund abgehoben, wobei sich ein Hohlraum bildet. Wegen der ringförmigen Anlage des Dichtungsmaterials um den Hohlraum herum kann keine Luft in den Hohlraum eindringen, so dass dort ein Unterdruck erzeugt wird. Der Unterdruck bzw. der vor dem Hohlraum auf die Vorder- oder Sichtseite der Schnappscheibe einwirkende Umgebungsdruck presst das Dichtungsmaterial anschließend um den Hohlraum herum dichtend gegen den Untergrund an, so dass auch später keine Luft in den Hohlraum eindringen kann.

Schnappscheiben sind an sich bekannt und werden seit langem bei Twist-Off-Schraubdeckeln von Konservengläsern eingesetzt, wo ein Unterdruck im Inneren der Konserve den als Schnappscheibe ausgebildeten Mittelteil des Deckels in einem metastabilen oder instabilen Zustand hält, bis ein Einströmen von Luft ins Innere der Konserve eine Rückverformung in den stabilen Ruhezustand bewirkt, wie z.B. in der US-A-3 152 711 und der US-A-3 160 302 offenbart. Zudem werden Schnappscheiben auch in Tastschaltern von Bedienteilen von elektronischen Geräten eingesetzt, wie zum Beispiel Computermäusen, wo die Schalter einen spürbaren Druckpunkt aufweisen sollen. Die Verformung der Schnappscheibe aus dem Ruhezustand wird in diesem Fall zur Herstellung eines elektrischen Kontakts genutzt, während die Rückverformung in den Ruhezustand eine taktile Wahrnehmung ermöglicht, wie in https://de.wikipedia.org/wiki/Knackfrosch beschrieben. Weiter werden Schnappscheiben auch als Knackfrosch oder Klicker bezeichnet, weil bei einer geeigneten Dimensionierung sowohl bei der Verformung in den Verformungszustand als auch bei der Rückkehr in den Ruhezustand hörbare Knack- oder Klickgeräusche erzeugt werden. Bei den erfindungsgemäßen Saugnäpfen werden diese Geräusche jedoch durch das Dichtungsmaterial gedämpft.

Bei den Schnappscheiben, die zu den zuvor genannten Zwecken verwendet werden, beträgt bei der Verformung zwischen dem Ruhezustand und dem Verformungszustand die maximale Hubhöhe zumeist weniger als 2 mm. Überraschenderweise hat sich gezeigt, dass eine solche Hubhöhe mehr als ausreichend ist, um zwischen dem Untergrund und dem verformbaren Teil der Schnappscheibe einen Unterdruck zu erzeugen, der den Saugnapf selbst auf nicht ganz ebenen Untergründen mit großer Kraft und über einen langen Zeitraum festhält. Dies setzt allerdings voraus, dass der Untergrund luftdicht ist, so dass durch ihn hindurch keine Luft in den Hohlraum eindringen kann, und dass ein geeignetes Dichtungsmaterial und eine luftdichte Schnappscheibe bzw. ein luftdichter Betätigungsteil verwendet werden. Die geringe Hubhöhe der Schnappscheibe gestattet es in Verbindung mit einer geringen Materialstärke der Schnappscheibe und des Dichtungsmaterials, sehr flache Saugnäpfe herzustellen.

Wenn im Rahmen der vorliegenden Patentanmeldung die Begriffe "konvex gewölbt" oder "konkav gewölbt" verwendet werden, dann beziehen sich diese Begriffe auf den Untergrund, an dem der Saugnapf befestigt wird, wobei "konvex" vom Untergrund weg gewölbt und "konkav" zum Untergrund hin gewölbt bedeutet. Wenn der Begriff "Scheibe" verwendet wird, bedeutet dies "Schnappscheibe".

Im Rahmen der vorliegenden Patentanmeldung bedeutet die Angabe "instabiler Verformungszustand", dass die Schnappscheibe bei der Entlastung der Anpresskraft nach dem Anpressen gegen einen Untergrund trotz der Erzeugung des Unterdrucks hinter ihrer Rückseite sofort von selbst in den Ruhezustand zurückkehrt. Dies ist der Fall, wenn die elastische Rückstellkraft der Schnappscheibe im Verformungszustand größer ist als die vom Luftdruck in der Umgebung des Saugnapfs auf einen verformbaren Mittelteil der Schnappscheibe ausgeübte Kraft.

Die Angabe "metastabiler Verformungszustand" bedeutet dagegen, dass die Schnappscheibe bei der Entlastung der Anpresskraft nach dem Anpressen gegen einen Untergrund erst mit Verzögerung in den Ruhezustand zurückkehrt, zum Beispiel nachdem eine geringe Menge Luft in den Hohlraum eingedrungen ist. Dies ist der Fall, wenn die elastische Rückstellkraft der Schnappscheibe im Verformungszustand kleiner ist als die vom Luftdruck in der Umgebung des Saugnapfs auf den verformbaren Mittelteil der Schnappscheibe ausgeübte Kraft. Erstaunlicherweise wird der Saugnapf auch im metastabilen Zustand der Schnappscheibe, d.h. vor der Rückkehr in den stabilen Ruhezustand, durch den Unterdruck am Untergrund festgehalten, obwohl dann die Hubhöhe nach der Kraftentlastung nur wenige Zehntel oder Hundertstel Millimeter beträgt.

Wenn die Schnappscheibe durch eine Krafteinwirkung in den Verformungszustand verformt wird, ohne dass der Saugnapf dabei gegen einen Untergrund angepresst wird, dann handelt es sich bei dem Verformungszustand stets um einen instabilen Zustand. In diesem Fall kehrt die Schnappscheibe bei Kraftentlastung stets sofort von selbst in den Ruhezustand zurück.

Schnappscheiben, die so gestaltet und bemessen sind, dass ihr Verformungszustand ein instabiler Zustand ist, so dass ihr verformter Teil nach der Entlastung sofort in den Ruhezustand zurückschnellt, haben den Vorteil einer taktilen und ggf. einer hörbaren Rückmeldung an den Benutzer. Auf der anderen Seite kann der Benutzer visuell nicht ohne weiteres erkennen, ob der Saugnapf von einem Unterdruck sicher am Untergrund festgehalten wird.

Schnappscheiben, die so gestaltet und bemessen sind, dass ihr Verformungszustand ein metastabiler Zustand ist, so dass ihr verformter Teil nach der Entlastung nicht sofort in den Ruhezustand zurückschnellt, haben den Vorteil, dass der Benutzer aufgrund der konkaven Wölbung der Sicht- oder Vorderseite visuell erkennen kann, dass der Saugnapf von einem Unterdruck am Untergrund festgehalten wird. Auf der anderen Seite erfolgt keine taktile oder hörbare Rückmeldung.

Grundsätzlich kann die Schnappscheibe des Saugnapfs aus einem beliebigen Material mit hoher Elastizität hergestellt werden, das heißt sowohl aus einem Metall oder einem Kunststoff. Da der Saugnapf umso flacher ausgebildet werden kann, je dünner die Schnappscheibe ist, werden jedoch zweckmäßig Schnappscheiben aus Stahl und bevorzugt aus Federstahl verwendet, die eine sehr hohe Elastizität mit geringen Herstellungskosten vereinen. Vorteilhaft wird die Schnappscheibe durch Umformen aus Stahlblech mit einer Zugfestigkeit von mehr als 500 N/mm², bevorzugt mehr als 600 N/mm², und einem Elastizitätsmodul von mehr als 150 000 N/mm² gefertigt. Eine Herstellung aus nicht-rostendem Stahl wird besonders bevorzugt, zum einen aus ästhetischen Gründen und zum anderen, weil dann auch in feuchten Umgebungen kein Korrosionsschutz notwendig ist. In diesem Fall besteht die Schnappscheibe zweckmäßig aus einem nichtrostenden Chrom-Nickel-Stahl. Bevorzugt wird austenitischer Federbandstahl mit der Bezeichnung X10CrNi18-9 und der Werkstoff-Nr. 1.4310 (ASTM A666 / AISI: Type 301/302) verwendet, dessen Materialstärke je nach Größe oder Flächeninhalt der Schnappscheibe zweckmäßig 0,1 bis 0,6 mm beträgt. Allerdings können auch Schnappscheiben aus lackiertem oder galvanisiertem Stahl verwendet werden. Dann ist zumindest die Sicht- oder Vorderseite und ein ggf. nicht von Dichtungsmaterial bedeckter Teil der Rückseite lackiert, verzinnt oder galvanisch beschichtet, z.B. vernickelt oder verchromt. In beiden Fällen lässt sich die Schnappscheibe mit einem sehr ansprechenden ästhetischen Erscheinungsbild zu verhältnismäßig niedrigen Kosten fertigen, insbesondere dann, wenn der Saugnapf nur aus der Schnappscheibe und dem Dichtungsmaterial besteht.

Für Anwendungen im Haushalt, wie Saughaken, liegt bei runden Schnappscheiben der bevorzugte Durchmesser im Bereich zwischen 30 und 50 mm, während der Durchmesser des verformbaren Teils bevorzugt zwischen 25 und 40 mm beträgt. Die zur Verformung der Schnappscheibe aus dem Ruhezustand in den Verformungszustand notwendige Anpresskraft beträgt vorzugsweise zwischen etwa 30 N und etwa 200 N, für Anwendungen im Haushalt zwischen etwa 30 N und etwa 60 N. Bei einem Durchmesser von etwa 40 mm lassen sich damit je nach Dichtungsmaterial Haftkräfte zwischen etwa 40 und 160 N oder mehr senkrecht zum Untergrund und Haftkräfte von bis zu 25 N oder mehr parallel zum Untergrund erzielen.

Bei Verwendung von Schnappscheiben aus Federbandstahl lassen sich diese Haftkräfte bereits mit sehr flachen Saugnäpfen erreichen, deren Dicke weniger als 2 bis 3 mm beträgt, da auch das Dichtungsmaterial im Bereich der ringförmigen Dichtfläche nur eine Dicke von etwa 0,5 bis 2 mm aufweisen braucht. Um eine sehr flache Bauweise des Saugnapfes zu ermöglichen, beträgt weiter der maximale Neigungswinkel der Sicht- oder Vorderseite der Schnappscheibe in Bezug zum ebenen Untergrund im Ruhezustand bevorzugt weniger als 10 Grad. Dadurch weist die Sicht- oder Vorderseite der Scheibe in der Mitte nur eine kaum wahrnehmbare Wölbung auf, was das ästhetische Erscheinungsbild verbessert und darüber hinaus die zur Verformung der Scheibe erforderliche Kraft reduziert. Eine bevorzugte Ausgestaltung der Erfindung sieht vor, dass das Verhältnis von maximaler Höhenabmessung am höchsten Punkt der Sicht- oder Vorderseite zum Durchmesser der Schnappscheibe weniger als 1 : 10, bevorzugt weniger als 1 : 12,5 und am besten weniger als 1 : 15 beträgt. Bei einem Scheibendurchmesser zwischen 30 und 50 mm beträgt in diesem Fall im Ruhezustand der Abstand des höchsten Punkts der Sicht- oder Vorderseite vom Untergrund und damit die maximale Höhe des Saugnapfes im Bereich der Schnappscheibe weniger als 4 mm und am besten weniger als 3 mm.

Um das ästhetische Erscheinungsbild im Vergleich zu bekannten Saugnäpfen weiter zu verbessern, weist der Saugnapf bevorzugt eine geschlossene Vorder- oder Sichtseite auf, wobei die Schnappscheibe das Dichtungsmaterial vollständig bedeckt, so dass nur die erstere sichtbar ist. Dadurch wird gleichzeitig auch verhindert, dass durch die Schnappscheibe hindurch Luft in den Hohlraum eindringen kann.

Grundsätzlich ist es zwar möglich, das Dichtungsmaterial an einem separaten ringförmigen Randelement des Saugnapfs vorzusehen, in dem die Schnappscheibe als getrenntes Bauelement befestigt ist. Vorteilhaft weist jedoch der Saugnapf außer der Schnappscheibe als Betätigungsteil und dem Dichtungsmaterial keine weiteren Teile mehr auf, was die Herstellung stark vereinfacht und preiswerter macht.

Eine weitere bevorzugte Ausgestaltung der Erfindung sieht vor, dass die Schnappscheibe einen Mittelteil umfasst, der beim Anpressen des Saugnapfs gegen einen Untergrund in den Verformungszustand verformt wird, sowie einen den Mittelteil umgebenden Umfangsrandteil, der beim Anpressen des Saugnapfs gegen den Untergrund nicht oder nur geringfügig verformt wird.

In diesem Fall ist mindestens der Umfangsrandteil auf seiner Rückseite mit dem Dichtungsmaterial versehen, so dass dieses beim Anlegen des Saugnapfs gegen den Untergrund und nach der Entlastung der Anpresskraft entlang einer ringförmigen ebenen Dichtfläche gegen den Untergrund anliegt. Vorzugsweise ist jedoch die gesamte Scheibe, d.h. der Umfangsrandteil und der Mittelteil, auf der dem Untergrund zugewandten Rückseite mit dem Dichtungsmaterial beschichtet. Das Dichtungsmaterial ist so geformt, dass es im Verformungszustand den Raum zwischen der unebenen Rückseite der Scheibe und dem Untergrund vorzugsweise vollständig füllt und flächig gegen den Untergrund anliegt, damit im Verformungszustand die Luft zwischen der Rückseite der Scheibe und dem Untergrund vollständig verdrängt wird.

Der Umfangsrandteil und der Mittelteil besitzen vorteilhaft einen kreisförmigen Umriss, damit der Umfangsrandteil beim Ausüben einer Anpresskraft auf den Mittelteil entlang seines gesamten Umfangs mit einer gleichen Kraft gegen den Untergrund angepresst wird. Jedoch sind auch andere Umrisse des Umfangsrandteils und des Mittelteils möglich, wie zum Beispiel polygonal mit gerundeten Ecken, oval oder elliptisch, wobei allerdings das Verhältnis von größter zu kleinster Querschnittsabmessung weniger als 2,5 : 1 und vorzugsweise weniger als 2 : 1 betragen sollte. Weiter muss der Umfangsrandteil nicht überall dieselbe Breite besitzen, sondern kann zum Beispiel zum Ausgleich unterschiedlicher Kräfte um den Umfang des Mittelteils herum unterschiedlich breit sein. Zweckmäßig ist mindestens ein äußerster umlaufender Randabschnitt des Umfangsrandteils eben.

Eine gute Dichtwirkung zwischen dem Dichtungsmaterial auf der Rückseite des Umfangsrandteils und dem Untergrund wird erzielt, wenn an der ringförmigen Dichtfläche hohe Flächenpressungen herrschen. Zu diesem Zweck beträgt die Breite der Dichtfläche gemäß einer bevorzugten Ausgestaltung der Erfindung weniger als 10 mm und vorteilhaft weniger als 6 mm. Dadurch können zum einen bei gleicher Anpresskraft die Abmessungen des Saugnapfes in einer zum Untergrund parallelen Richtung klein gehalten werden. Insbesondere auf unebenen Untergründen mit einer gleichförmigen Oberflächenstruktur aus kleinen Erhebungen und Vertiefungen, wie z.B. auf gleichmäßig rauen Fliesen, sorgt eine hohe Flächenpressung zum anderen für eine hervorragende Dichtwirkung und damit für eine lange Haftdauer des Saugnapfes.

Grundsätzlich kann die gesamte Schnappscheibe bzw. deren Mittelteil im Ruhezustand gleichmäßig konvex vom Untergrund weg gewölbt sein. Um die Verformung zu erleichtern, sind die Scheibe und/oder deren Mittelteil jedoch vorteilhaft in mehrere ringförmige Bereiche unterteilt, die unterschiedliche Neigungswinkel in Bezug zum ebenen Umfangsrand bzw. zum ebenen Untergrund besitzen. Bei kreisförmigen Scheiben sind diese Bereiche vorteilhaft konzentrisch zur Mitte der Scheibe.

Wie bei den Schnappscheiben von Twist-Off-Deckeln umfassen diese Bereiche im Ruhezustand von außen nach innen bevorzugt einen allgemein ebenen äußersten Bereich, einen daran angrenzenden kegelstumpfförmigen Bereich, einen daran angrenzenden konvex gewölbten Bereich, dessen maximaler Neigungswinkel flacher ist als der des kegelstumpfförmigen Bereichs und vorzugsweise weniger als 10 Grad in Bezug zum ebenen Untergrund beträgt, sowie einen mittigen Bereich, der allgemein eben oder leicht gewölbt sein kann. Wenn im Ruhezustand eine ausreichend große Druckkraft auf die Mitte der Sicht- oder Vorderseite einer solchen Scheibe ausgeübt wird, verformt sich der gesamte Mittelteil, wobei der im Ruhezustand konvex gewölbte Bereich schlagartig in einen konkav gewölbten Verformungszustand schnellt. Der allgemein ebene äußerste Bereich und der kegelstumpfförmige Bereich behalten ihre Form im Wesentlichen bei, wobei jedoch der Neigungswinkel des letzteren etwas flacher wird.

Vorteilhaft wird die Schnappscheibe durch Stanzen und Umformen aus Blech hergestellt, so dass anschließend zur Fertigstellung des Saugnapfes nur noch das Dichtungsmaterial auf die dem Untergrund zugewandte Seite der Scheibe aufgebracht werden braucht, um einen Saugnapf zu fertigen, der im Gebrauchszustand aus einem einzigen Teil besteht und außer der Scheibe und dem Dichtungsmaterial vorteilhaft keine weiteren Bestandteile umfasst. Bei Bedarf kann jedoch noch ein Kleber oder Haftvermittler vorgesehen sein, der die Haftung des Dichtungsmaterials an der Scheibe bewirkt oder verbessert.

Soweit dies der Verwendungszweck des Saugnapfes zulässt, wie z.B. als Teil eines Saughakens oder als Mittel zum lösbaren Befestigen eines Gegenstands am Untergrund, können beim Stanzen und Umformen gleichzeitig über den Umfangsrandteil der Schnappscheibe überstehende Teile, wie z.B. ein Haken oder Haltenasen, an der Scheibe bzw. Aussparungen oder Löcher in der Scheibe gebildet werden.

Eine weitere bevorzugte Ausgestaltung der Erfindung sieht vor, dass das Dichtungsmaterial an der Schnappscheibe angeformt wird, es an die Form von deren Rückseite anzupassen und die beiden Komponenten luftdicht und fest miteinander zu verbinden. Dies vereinfacht die Fertigung, gestattet die Herstellung eines im Gebrauchszustand aus einem einzigen Teil bestehenden Saugnapfes und wirkt dem Eindringen von Luft in den Hohlraum durch das Dichtungsmaterial hindurch entgegen. Bevorzugt wird die gesamte dem Untergrund zugewandte Rückseite der Scheibe mit dem Dichtungsmaterial beschichtet, das in einer durchgehenden Schicht auf die Scheibe aufgebracht wird. Allerdings kann entlang des äußeren Umfangs der Scheibe ein schmaler Streifen unbeschichtet bleiben, damit nach der Anbringung des Saugnapfs am Untergrund das Dichtungsmaterial nicht sichtbar ist oder weniger stark auffällt.

Bevorzugt ist das Dichtungsmaterial so geformt, dass die von der Schnappscheibe abgewandte Rückseite des Dichtungsmaterials im Ruhezustand der Scheibe eine erhöhte ringförmige ebene Dichtfläche zum Anlegen gegen den ebenen Untergrund und eine von der Dichtfläche umgebene flache konkave Vertiefung aufweist, während sie im Verformungszustand der Scheibe eine Ebene aufspannt oder nahezu vollständig eben ist. Durch das erstere lässt sich der von der Dichtfläche umgebene Teil der Scheibe aus dem konvexen Ruhezustand in den Verformungszustand verformen, ohne dass das Dichtungsmaterial vor Erreichen des Verformungszustands gegen den Untergrund anschlägt. Durch das letztere wird im Verformungszustand der Scheibe im Wesentlichen die gesamte Luft aus dem Zwischenraum zwischen der ebenen Rückseite des Dichtungsmaterials und der gegenüberliegenden ebenen Oberfläche des Untergrundes verdrängt, was bei dem erfindungsgemäßen Saugnapf aufgrund des geringen Volumens des Hohlraums von Bedeutung ist. Gemäß einer bevorzugten Ausgestaltung der Erfindung bildet das Dichtungsmaterial eine durchgehende geschlossene Schicht, deren Dicke in der Mitte bzw. im Bereich des Mittelteils kleiner als am äußeren Umfang bzw. im Bereich des Umfangsrandteils mit der ringförmigen Dichtfläche ist oder von einem äußeren Umfang oder Umfangsrandteil zu einer Mitte der Schnappscheibe hin zuerst zunimmt und dann abnimmt.

Bei bekannten Saugnäpfen der eingangs genannten Art hängt das Volumen des Hohlraums, in dem sich der Unterdruck einstellt, von der Zugkraft ab, die auf den Saugnapf ausgeübt wird. Demgegenüber ist das Volumen dieses Hohlraums bei dem erfindungsgemäßen Saugnapf nach der Rückkehr der Schnappscheibe in den Ruhezustand dasselbe wie das Volumen der flachen konkaven Vertiefung und damit des Hohlraums, der nach dem Anlegen des Dichtungsmaterials gegen den Untergrund und vor der Verformung der Schnappscheibe zwischen dem Dichtungsmaterial und dem Untergrund eingeschlossen ist.

Vorzugsweise entspricht die Tiefe der flachen konkaven Vertiefung in Bezug zu der umgebenden Dichtfläche dem Bewegungsweg der Mitte der Schnappscheibe bei der Verformung aus dem Ruhezustand in den Verformungszustand oder ist geringfügig kleiner, so dass das Dichtungsmaterial nach dem Anpressen der Schnappscheibe gegen den Untergrund ganzflächig gegen diesen anliegt. Auf der anderen Seite sollte die Tiefe der flachen konkaven Vertiefung größer als die Hälfte des Bewegungswegs der Mitte der Schnappscheibe bei der Verformung aus dem Ruhezustand in den Verformungszustand sein, damit ausreichend Verformungsenergie in der Schnappscheibe gespeichert wird.

Die Haftung des Dichtungsmaterials an der Schnappscheibe kann permanent sein, so dass sich die Scheibe weder unter Scherbeanspruchung noch durch Abziehen vom Dichtungsmaterial lösen kann. Alternativ kann jedoch auch vorgesehen sein, dass sich das Dichtungsmaterial bei Bedarf von der Scheibe lösen lässt, so dass nach einem längeren Gebrauch des Saugnapfs vor einer Wiederverwendung das gealterte Dichtungsmaterial ausgetauscht werden kann.

Als Dichtungsmaterial kann grundsätzlich jedes Material verwendet werden, dessen Eignung für Saugnäpfe bereits aus dem Stand der Technik bekannt ist, wie zum Beispiel Weich-PVC oder verschiedene Elastomere und Gummi- oder Kautschukmaterialien. Vorzugsweise wird ein thermoplastisches Dichtungsmaterial verwendet, da sich thermoplastische Dichtungsmaterialien z.B. durch Spritzgießen auf einfache Weise an der Scheibe anformen lassen und somit kein zusätzlicher Kleber zum Aufkleben auf die Scheibe notwendig ist. Zweckmäßig wird ein Dichtungsmaterial mit einer Shore-Härte C von weniger als 30 und besser von weniger als 20 verwendet, da die Abdichtung des Hohlraum mit abnehmender Shore-Härte C gewöhnlich verbessert werden kann.

Allerdings eignen sich viele aus dem Stand der Technik bekannte Dichtungsmaterialien für Saugnäpfe, wie zum Beispiel Weich-PVC, nur für glatte ebene Untergründe. Wenn der Saugnapf auch auf allgemein ebenen aber rauen Untergründen verwendet werden soll, umfasst das Dichtungsmaterial besser einen luftdichten wiederablösbaren Kleber, vorzugsweise einen Haftklebstoff, der auch als Pressure Sensitive Adhesive (PSA) bezeichnet wird. Der Haftklebstoff (PSA) kann auf die dem Untergrund zugewandte Oberfläche eines luftdichten Elastomers, Gels oder Schaumstoffmaterials aufgebracht werden, das dann zusammen mit dem Haftklebstoff (PSA) das Dichtungsmaterial bildet.

Vorzugsweise wird jedoch ein Dichtungsmaterial verwendet, das aus einem Haftschmelzklebstoff (hot melt PSA) besteht. Bei Haftschmelzklebstoffen handelt es sich um Klebstoffe auf der Basis von thermoplastischem Kautschuk (TK), welche nicht vollständig abbinden, sondern dauerhaft klebrig bleiben. Bevorzugt werden Haftschmelzklebstoffe verwendet, die auf Block-Copolymeren basieren und mit mindestens einem Harz klebrig gemacht werden. Dabei wird zwischen permanent klebenden und wiederablösbaren Typen mit geringerer Klebkraft (low tack) unterschieden. Die letzteren werden im englischen Sprachraum auch als "Fugitive Glues", "E-z-release glues", "booger glues" oder "credit card glues" bezeichnet, weil sie häufig zum lösbaren Aufkleben von Kreditkarten auf Briefpapier verwendet werden. Diese wiederablösbaren Haftschmelzklebstoffe mit geringer Klebkraft sind für den erfindungsgemäßen Saugnapf sehr vorteilhaft, da sie sich von festen Untergründen, wie Fliesen, Glas, Holz, Melamin oder Metallblech, rückstandsfrei und einfach entfernen lassen. Außerdem hat sich gezeigt, dass diese Haftschmelzklebstoffe durch den Anpressdruck der Scheibe bzw. durch den Unterdruck im Hohlraum auf den vorgenannten Untergründen auch dann eine lang anhaltende gute Abdichtung des Hohlraums gewährleisten, wenn der Untergrund eine raue Oberfläche besitzt. Zudem verleihen Dichtungsmaterialien in Form von Haftschmelzklebstoffen dem Saugnapf auch höhere Haftkräfte, und zwar sowohl in einer zum Untergrund senkrechten Richtung als auch parallel zum Untergrund. Die Ursachen für diese Eigenschaften liegen wohl darin, dass die hohe Flächenpressung zwischen dem Dichtungsmaterial und dem Untergrund infolge des Anpressdrucks der Scheibe bzw. des Unterdrucks im Hohlraum in Verbindung der Nachgiebigkeit des Haftschmelzklebstoffs auch bei rauen Untergründen dafür sorgt, dass sich der Haftschmelzklebstoff auf seiner gesamten Anlagefläche am Untergrund eng und lückenlos an den Untergrund anschmiegt und dort eine luftdichte Klebeverbindung mit dem Untergrund eingeht.

Geeignete wiederablösbare Haftschmelzklebstoffe sind zum Beispiel in der DE-A-103 17 788, der US-A-4 680 333 sowie in der US-A-5 624 986 beschrieben, deren gesamter Inhalt hier durch Bezugnahme aufgenommen wird. Im Handel sind geeignete wiederablösbare Haftschmelzklebstoffe z.B. unter der Bezeichnung Peeltec 210, Bühnen 1585, Bühnen 1645, Tecbond 2507 FS, Tecbond 269 CT, tesa TACK, 3M 3798 LM oder Technicoll 9301 erhältlich. Am besten eignen sich von diesen diejenigen mit geringer Klebkraft (low tack). Die Klebkraft (tack) bezeichnet dabei die Eigenschaft, unter leichtem Druck an einer Oberfläche zu haften. Bevorzugt beträgt die Klebkraft weniger als 250 g, gemessen mit einem Polyken Probe Tack Tester bei 23° C, Verweilzeit 1 s, und kann 0 g oder nahezu 0 g betragen, wie z.B. bei Peeltec 210 oder 3M 3798 LM (tack free). In diesem Fall ist vor dem Gebrauch keine Abdeckfolie zum Abdecken des Haftschmelzklebstoffs erforderlich.

Vorzugsweise werden Haftschmelzklebstoffe verwendet, deren Schmelzpunkt oberhalb von 100°C, am besten oberhalb von 120°C liegt, so dass sie bei höheren Umgebungstemperaturen nicht erweichen. Jedoch wird andererseits das Aufbringen des Haftschmelzklebstoffs auf die Scheibe erleichtert, wenn der Schmelzpunkt unterhalb von 250°C und besser noch unterhalb von 200°C liegt.

Einige Haftklebstoffe haben nach der Befestigung des Saugnapfs die Tendenz, unter dem Anpressdruck der Umgebungsluft mit der Zeit etwas zu kriechen. Dadurch wird zwar die Abdichtwirkung des Hohlraums verbessert, jedoch verändert das an den Hohlraum angrenzende Dichtungsmaterial seine Form etwas. Dies hat unter Umständen zur Folge, dass sich die Scheibe nach einiger Zeit nicht mehr in den Verformungszustand verformen lässt, z.B. nachdem der Saugnapf vom Untergrund abgenommen worden ist, was eine Wiederverwendung des Saugnapfs erschwert. In diesem Fall umfasst das Dichtungsmaterial zweckmäßig nur hinter dem Umfangsrandteil bzw. im Bereich der Dichtfläche einen wiederablösbaren Haftschmelzklebstoff, während es ansonsten vorteilhaft aus einem anderen nachgiebigen Material besteht, das nicht zum Kriechen neigt, vorzugsweise aus einem elastischeren und auch nach längerer Zeit noch reversibel verformbares Material, wie einem Elastomer, einem Gummi- oder Kautschukmaterial oder einem thermoplastischen Elastomer. Alternativ kann im Haftschmelzklebstoff der Anteil an Bestandteilen mit hohem Molekulargewicht oder der Grad der chemischen oder physikalischen Vernetzung vergrößert werden, um Kriechen entgegen zu wirken.

Eine andere vorteilhafte Ausgestaltung der Erfindung sieht vor, dass das Dichtungsmaterial eine sogenannte Mikrosaugnapffolie umfasst, die sich zweckmäßig über die gesamte Rückseite der Scheibe erstreckt und mittels eines elastischen Klebers daran angebracht ist, bevorzugt mittels eines thermoplastischen Klebers, z.B. einem Haftschmelzkleber oder Heißschmelzkleber. Mikrosaugnapffolien sind u.a. zur lösbaren Befestigung von Smartphones an Ladestationen bekannt.

Zum Halten größerer Lasten können entweder die Abmessungen des Saugnapfs bzw. des verformbaren Teils der Schnappscheibe vergrößert oder mehrere Saugnäpfe bzw. Schnappscheiben neben- und/oder übereinander angeordnet werden. Im zuletzt genannten Fall kann z.B. eine mit Haken, Magneten oder anderen Aufhänge- oder Haltemitteln versehene Platte oder Leiste an mehreren separaten Saugnäpfen befestigt werden oder alternativ mehrere Schnappscheiben neben- und/oder übereinander in die Platte oder Leiste eingeformt werden, deren Rückseite dann zumindest im Bereich der Schnappscheiben mit dem Dichtungsmaterial versehen wird, wie zuvor beschrieben.

Im Folgenden wird die Erfindung anhand von einigen in der Zeichnung dargestellten Ausführungsbeispielen näher erläutert.
Fig. 1 zeigt eine Vorderseitenansicht eines erfindungsgemäßen Saugnapfs mit einer Schnappscheibe;
Fig. 2 zeigt eine perspektivische Ansicht des Saugnapfs;
Fig. 3 zeigt eine Seitenansicht des Saugnapfs;
Fig. 4 zeigt eine vergrößerte Querschnittsansicht des Saugnapfs aus Fig. 1 entlang der Linie A-A im Ruhezustand nach dem Anlegen gegen einen Untergrund;
Fig. 5 zeigt eine entsprechende Querschnittsansicht des Saugnapfs im Verformungszustand beim Anpressen gegen den Untergrund;
Fig. 6 zeigt eine entsprechende Querschnittsansicht des Saugnapfs nach der Entlastung der Anpresskraft und der Rückkehr der Schnappscheibe in den Ruhezustand;
Fig. 7 zeigt eine entsprechende Querschnittsansicht eines Saugnapfs mit einer dünneren Schnappscheibe, die nach der Entlastung der Anpresskraft nicht in den Ruhezustand zurückkehrt;
Fig. 8 zeigt eine Vorderseitenansicht eines anderen erfindungsgemäßen Saugnapfs;
Fig. 9 zeigt eine Seitenansicht des Saugnapfs aus Fig. 8;
Fig. 10 zeigt eine vergrößerte Querschnittsansicht eines weiteren modifizierten Saugnapfs im Ruhezustand;
Fig. 11 zeigt eine vergrößerte Querschnittsansicht des Saugnapfs aus Fig. 10 im Verformungszustand;
Fig. 12 zeigt eine vergrößerte Querschnittsansicht eines noch weiteren modifizierten Saugnapfs im Ruhezustand;
Fig. 13 zeigt eine vergrößerte Querschnittsansicht des Saugnapfs aus Fig. 12 im Verformungszustand;
Fig. 14 zeigt eine Vorderseitenansicht eines noch weiteren erfindungsgemäßen Saugnapfs;
Fig. 15 zeigt eine Vorderseitenansicht eines noch weiteren erfindungsgemäßen Saugnapfs;
Fig. 16 zeigt eine vergrößerte Querschnittsansicht des Saugnapfs aus Fig. 15 entlang der Linie B-B im Ruhezustand;
Fig. 17 zeigt eine entsprechende Querschnittsansicht des Saugnapfs aus Fig. 15 im Verformungszustand;
Fig. 18 zeigt eine Seitenansicht eines noch anderen erfindungsgemäßen Saugnapfs;
Fig. 19 zeigt eine Vorderseitenansicht des Saugnapfs aus Fig. 18;
Fig. 20 zeigt eine perspektivische Ansicht des Saugnapfs aus Fig. 18 und 19;
Fig. 21 zeigt eine vergrößerte Querschnittsansicht des Saugnapfs aus Fig. 19 entlang der Linie C-C im Ruhezustand;
Fig. 22 zeigt eine entsprechende Querschnittsansicht des Saugnapfs aus Fig. 19 im Verformungszustand;
Fig. 23 zeigt eine Vorderseitenansicht eines noch weiteren erfindungsgemäßen Saugnapfs;
Fig. 24 zeigt eine vergrößerte Querschnittsansicht des Saugnapfs entlang der Linie D-D der Fig. 23 im Ruhezustand;
Fig. 25 zeigt eine schematische Ansicht einer Hand beim Anbringen bzw. beim Abnehmen eines erfindungsgemäßen Saugnapfs;
die Figuren 26 und 27 zeigen Seitenansichten eines Saugnapfs entsprechend den Figuren 1 bis 6, jedoch mit modifizierten Hakenteilen.

Die in der Zeichnung dargestellten Saugnäpfe 10 sind zur lösbaren Befestigung an einem luftdichten Untergrund 12 mit einer allgemein planen Oberfläche 14 bestimmt. Bei dem Untergrund 12 kann es sich zum Beispiel um eine Glasscheibe, eine Wandfliese, eine Wand oder Tür von einem Möbelstück oder Einrichtungsteil, wie einem Schrank, Herd oder Kühlschrank mit einer Kunststoff-, Melamin- Holz-, Lack- oder Metall-Oberfläche 14 handeln. Die Oberfläche 14 kann eben oder auch etwas uneben sein, solange die Unebenheiten niedriger als etwa 0,8 mm sind und keine steilen Übergänge besitzen.

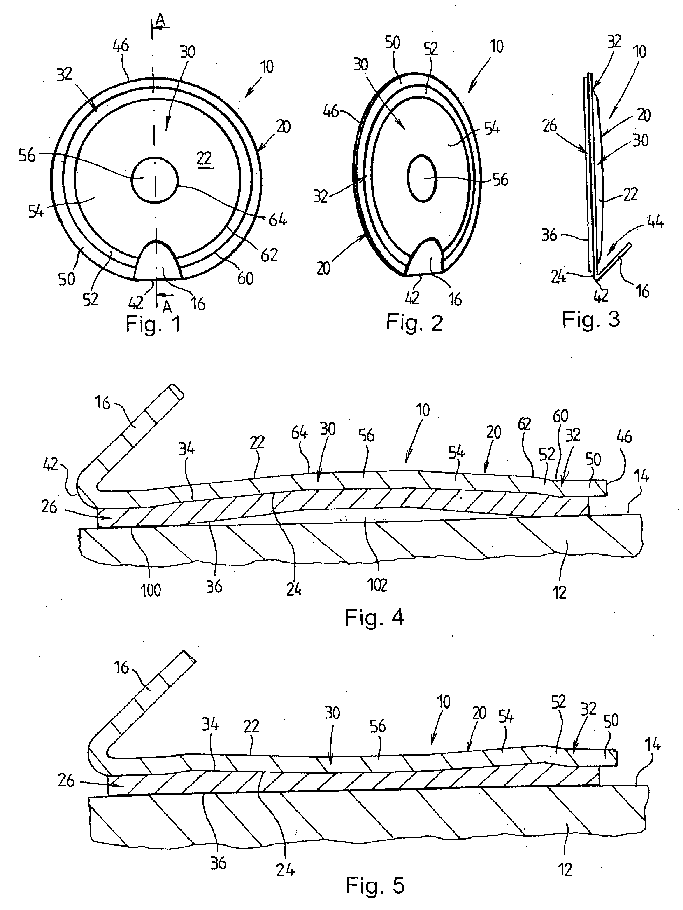

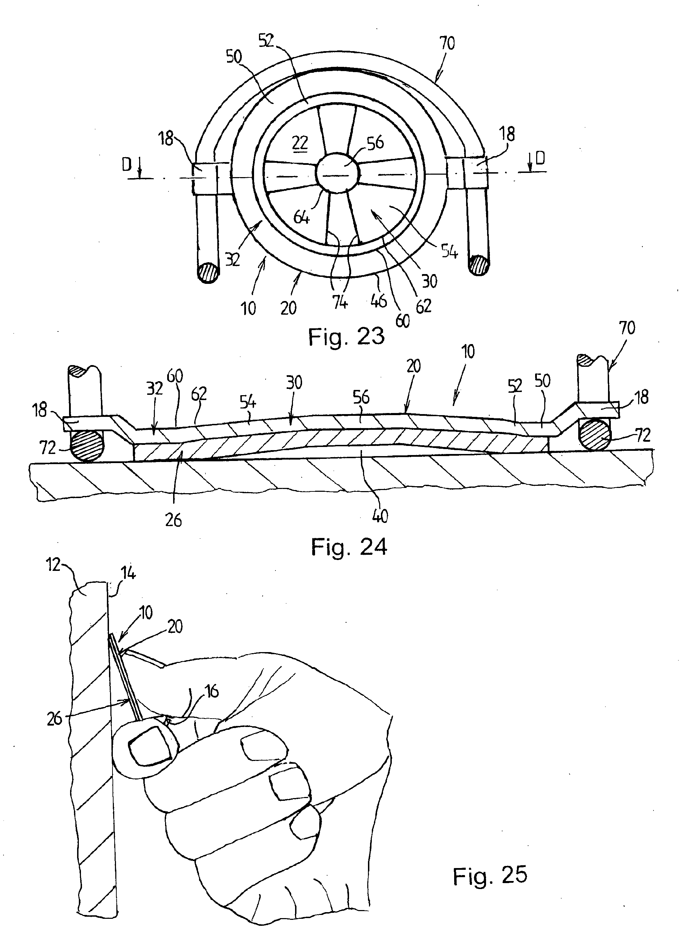

Die Saugnäpfe 10 in den Figuren 1 bis 22 und 25 bis 28 sind Teile von Saughaken zum Aufhängen von Handtüchern, Bekleidung oder anderen Gegenständen und besitzen zu diesem Zweck einen Hakenteil 16, während der Saugnapf 10 in den Figuren 23 und 24 zur Befestigung von Seifenschalen, Toilettenpapierhaltern oder dergleichen Gegenständen an einer vertikalen Oberfläche 14 dient und zwei Halteteile 18 aufweist. Die Saugnäpfe 10 eignen sich jedoch auch zur lösbaren Befestigung an Oberflächen 14, die nicht vertikal ausgerichtet sind, wobei die vom Saugnapf 10 aufgenommene Last sowohl parallel als auch senkrecht zur Oberfläche 14 wirken kann.

Abgesehen von dem Hakenteil 16 bzw. den Halteteilen 18 bestehen die Saugnäpfe 10 im Wesentlichen nur aus einer flachen elastisch verformbaren Schnappscheibe 20, die eine vom Untergrund 12 abgewandte Sicht- oder Vorderseite 22 und eine dem Untergrund 12 zugewandte Rückseite 24 aufweist, sowie einem nachgiebigen luftdichten Dichtungsmaterial 26 an der Rückseite 24 der Schnappscheibe 20. Die Sicht- oder Vorderseite 22 der Schnappscheibe 20 bildet zugleich auch die Sicht- oder Vorderseite des Saugnapfs 10.

Die Schnappscheibe 20 wird durch Stanzen und Umformen aus einem federelastischen Edelstahl, vorzugsweise aus nicht-rostendem Federbandstahl X 10 CrNi 18-8 (Werkstoff Nr. 1.4310) oder aus einem galvanisierten und/oder lackiertem Federstahlblech gefertigt. Die Blechstärke des verwendeten Stahlblechs beträgt zwischen 0,2 und 0,4 mm, bevorzugt zwischen 0,25 und 0,35 mm und am besten etwa 0,3 mm. Wenn eine solche Schnappscheibe 20 vor der Beschichtung mit dem Dichtungsmaterial 26 verformt wird, emittiert sie bei der Rückkehr in den Ruhestand ein hörbares Klickgeräusch.

Die Schnappscheibe 20 besitzt keinerlei Durchgangsöffnungen, so dass ihre Sicht- oder Vorderseite 22 eine geschlossene Fläche bildet, keine Luft durch die Schnappscheibe 20 hindurchdringen kann und die Schnappscheibe 20 das Dichtungsmaterial 26 vollständig bedeckt oder verdeckt. Die Schnappscheibe 20 umfasst einen reversibel verformbaren Mittelteil 30 und einen den Mittelteil 30 umgebenden Umfangsrandteil 32, der sich bei einer reversiblen Verformung des Mittelteils 30 nicht oder nur geringfügig verformt. Das Dichtungsmaterial 26 besitzt eine luftdicht an der Rückseite 24 der Schnappscheibe 20 haftende Vorderseite 34 und eine dem Untergrund 12 zugewandte Rückseite 36.

Zur Befestigung am Untergrund 12 kann der Saugnapf 10 in einem Ruhezustand der Schnappscheibe 20 mit dem Dichtungsmaterial 26 gegen die Oberfläche 14 des Untergrunds 12 angelegt werden, wie beispielhaft in Fig. 4 dargestellt. Wenn in diesem Zustand eine ausreichend große Anpresskraft auf die Mitte der Sicht- oder Vorderseite 22 der Schnappscheibe 20 ausgeübt wird, wird die Schnappscheibe 20 bzw. deren Mittelteil 30 in einen instabilen oder metastabilen Verformungszustand verformt, wie beispielhaft in Fig. 5 dargestellt. Bei Entlastung der Anpresskraft verformt sich die Schnappscheibe 20 aus dem Verformungszustand wieder selbsttätig in Richtung des Ruhezustands zurück.

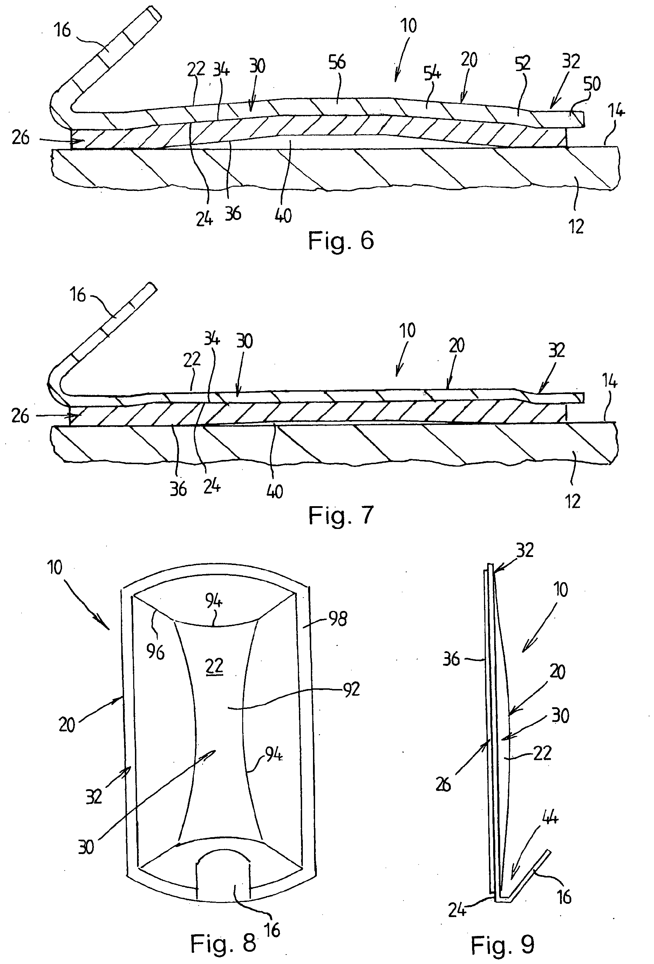

Wenn die Schnappscheibe 20 aus nicht-rostendem Federbandstahl X 10 CrNi 18-8 gefertigt wird, dessen Blechstärke bei einem Durchmesser von etwa 35 bis 40 mm 0,35 mm oder mehr beträgt, dann schnellt der Mittelteil 30 der Schnappscheibe 20 bei der Entlastung der Anpresskraft wieder in den Ruhezustand zurück, wie in Fig. 6 dargestellt. Der Weg, den die Mitte der Schnappscheibe 20 dabei zurücklegt, wird als Hubhöhe bezeichnet, und beträgt etwa 1 mm. Wenn dagegen die Blechstärke etwa 0,25 mm oder weniger beträgt, verformt sich der Mittelteil 30 der Schnappscheibe 20 bei Entlastung der Anpresskraft aus dem Verformungszustand nur teilweise in Richtung des Ruhezustands zurück, wie in Fig. 7 dargestellt.

In beiden Fällen bildet sich zwischen der Oberfläche 14 des Untergrunds 12 und der Rückseite 24 der Schnappscheibe ein Hohlraum 40, dessen Höhe im zuerst genannten Fall der Hubhöhe entspricht und im zuletzt genannten Fall nur 0,1 bis 0,2 mm beträgt. Das um den Hohlraum 40 herum gegen den Untergrund 12 anliegende Dichtungsmaterial 26 verhindert einen Zutritt von Luft in den Hohlraum 40, so dass dort in beiden Fällen ein Unterdruck oder Vakuum erzeugt wird.

Bei den Saugnäpfen 10 in den Figuren 1 bis 24 bestehen der Hakenteil 16 bzw. die Halteteile 18 aus demselben Federstahlblech wie die Schnappscheibe 20 und werden beim Ausstanzen und Umformen der Schnappscheibe 20 mit ausgestanzt und umgeformt, so dass der Hakenteil 16 bzw. die Halteteile 18 über den äußeren Umfang 46 der Schnappscheibe 20 überstehen. Der Hakenteil 16 der Saugnäpfe 10 in den Figuren 1 bis 22 ist entlang einer geraden Biegelinie 42 unter einem spitzen Winkel in Richtung der Mitte der Schnappscheibe 20 umgebogen, so dass er nach der Anbringung des Saugnapfs 10 am Untergrund 12 schräg nach oben weist und mit der Sicht- oder Vorderseite 22 der Schnappscheibe 20 einen nach oben zu divergierenden V-förmigen Spalt 44 begrenzt, in dem eine Last eingehängt werden kann. Um das Moment zu minimieren, das von der Last auf den Saugnapf 10 ausgeübt wird, befindet sich der tiefste Punkt des V-förmigen Spaltes 44 zum einen so nahe wie möglich an der Oberfläche 14 des Untergrunds 12 und zum anderen so nahe wie möglich am tiefsten Punkt des Umfangs 46 der Schnappscheibe 20, um den der Saugnapf 10 verschwenkt wird, wenn er sich ungewollt von der Oberfläche 14 löst. Das erstere wird erreicht, indem der Biegeradius am Übergang zwischen der Schnappscheibe 20 und dem Hakenteil 16 weniger als 5 mm und am besten weniger als 3 mm beträgt. Das letztere wird erreicht, wenn die Biegelinie 42 tangential zum äußeren Umfang 46 der Schnappscheibe ist, d.h. wenn der Hakenteil 16 nicht nach unten über den äußeren Umfang 46 der Schnappscheibe 20 übersteht. Alternativ kann der Hakenteil 16 jedoch auch etwas nach unten über den Umfang 46 der Schnappscheibe 20 überstehen und/oder einen gerundeten Querschnitt besitzen.

Die Schnappscheiben 20 der Saugnäpfe 10 in den Figuren 1 bis 7, 10 bis 14 und 16 bis 25 besitzen einen kreisförmigen Umriss sowie einen Durchmesser zwischen 30 und 50 mm. Bei diesen Schnappscheiben 20 besitzt der verformbare Mittelteil 30 einen Durchmesser zwischen 20 und 25 mm und somit einen Flächeninhalt von etwa 300 bis etwa 500 mm².

Bei den Saugnäpfen 10 in den Figuren 1 bis 7, 10 bis 13 sowie 23 und 24 umfasst der Umfangsrandteil 32 der Schnappscheibe 20 einen zur Oberfläche 14 des Untergrundes 12 parallelen ebenen äußersten Randabschnitt 50, der sich kreisringförmig entlang des gesamten Umfangs 46 der Schnappscheibe 20 erstreckt, sowie einen von dem Randabschnitt 50 umgebenen kegelstumpfförmigen Abschnitt 52, dessen Neigungswinkel etwa 5 bis 10 Grad beträgt. Der Mittelteil 30 umfasst einen an den kegelstumpfförmigen Abschnitt 52 des Umfangsrandteils 32 angrenzenden flacheren kegelstumpfförmigen Abschnitt 54, dessen Neigungswinkel etwa 2 bis 5 Grad beträgt, sowie einen allgemein ebenen mittigen Abschnitt 56, der parallel zum Randabschnitt 50 bzw. zur Oberfläche 14 ist. Zwischen den benachbarten Abschnitten 50, 52; 52, 54; 54, 56 ist jeweils eine beim Umformen eingeformte umlaufende kreisförmige Prägelinie 60, 62, 64 angeordnet. Die Prägelinien 60, 62, 64 bilden konzentrisehe Knick- oder Schwächungslinien, welche die Verformung der Schnappscheibe 20 erleichtern.

Wie durch Vergleich der Figuren 4 und 5, 10 und 11 sowie 12 und 13 ersichtlich ist, ist die Sicht- oder Vorderseite 22 der Schnappscheibe 20 im Bereich der beiden Abschnitte 54, 46 des Mittelteils 30 im Ruhezustand in Bezug zu der ebenen Oberfläche 14 des Untergrunds 12 konvex gewölbt, während sie im Verformungszustand in Bezug zur Oberfläche 14 konkav gewölbt ist. Der Neigungswinkel ist jeweils ungefähr derselbe.

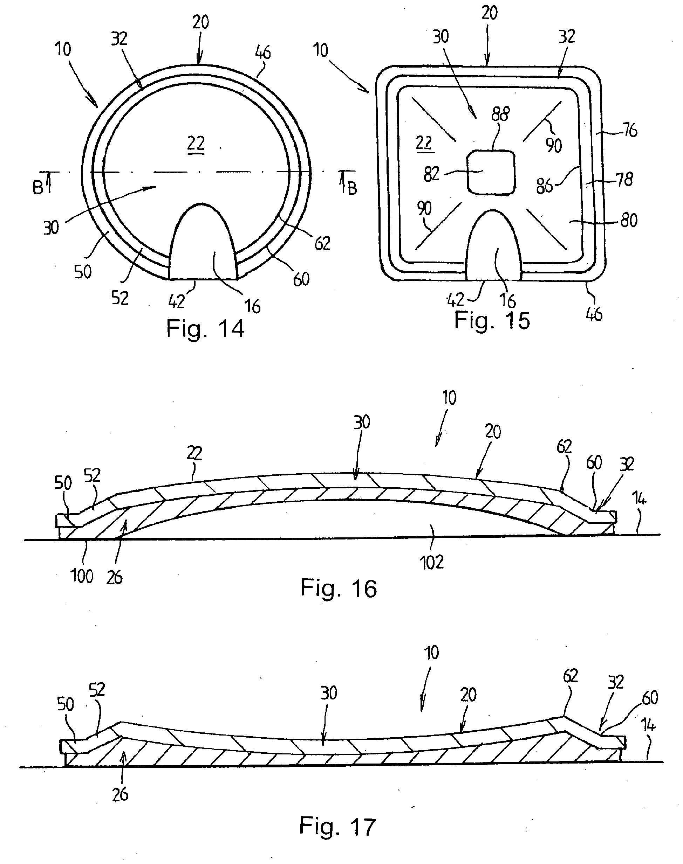

Bei den Saugnäpfen 10 in den Figuren 14, 16 und 17 ist die Sicht- oder Vorderseite 22 im Bereich des verformbaren Mittelteils 30 der Schnappscheibe 20 im Ruhezustand gleichmäßig konvex gewölbt, wobei der maximale Neigungswinkel in Bezug zur Oberfläche 14 weniger als 10 Grad beträgt. Die Wölbung kann entweder einen konstanten Krümmungsradius aufweisen, wie in Fig. 16 dargestellt, oder alternativ einen von außen nach innen abnehmenden Krümmungsradius. Der Umfangsrandteil 32 umfasst wie bei den Saugnäpfen 10 in den Figuren 1 bis 7 einen zur Oberfläche 14 des Untergrundes 12 parallelen ebenen äußersten Randabschnitt 50 und einen von dem Randabschnitt 50 umgebenen kegelstumpfförmigen Abschnitt 52. Allerdings ist dessen Neigungswinkel in Bezug zur Oberfläche 14 steiler und beträgt etwa 20 bis 40 Grad.

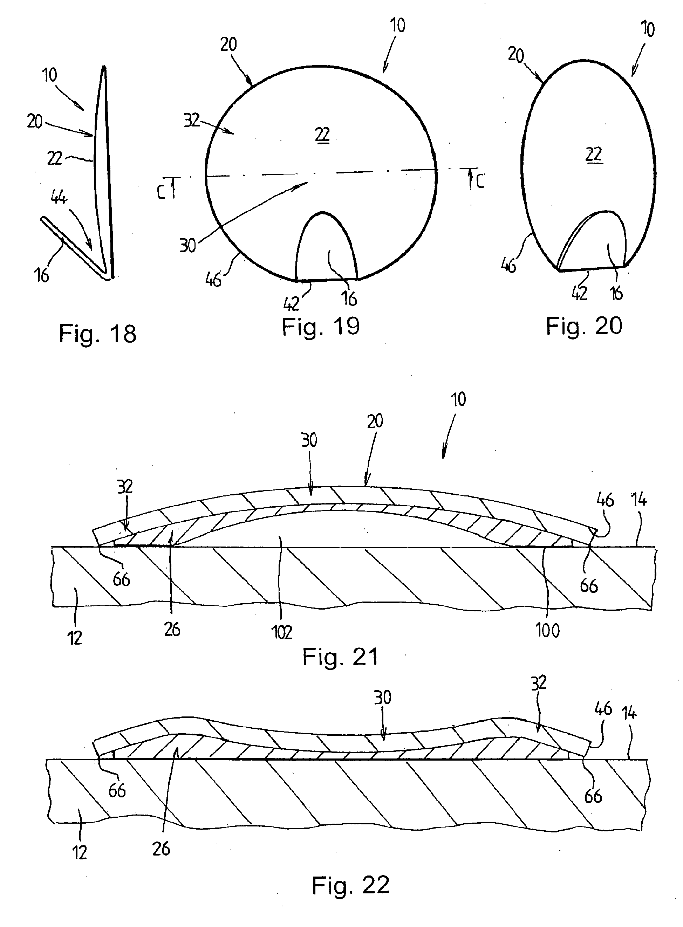

Demgegenüber ist bei dem Saugnapf 10 in den Figuren 18 bis 22 die ganze Sicht- oder Vorderseite 22 der Schnappscheibe 20 im Ruhezustand konvex gewölbt, wodurch das ästhetische Erscheinungsbild noch weiter verbessert werden kann. Außerdem liegt dort eine dem Untergrund 12 zugewandte äußere Randkante 66 des äußeren Umfangs 46 der Schnappscheibe 20 gegen die Oberfläche 14 an bzw. weist nur einen sehr geringen Abstand vom Untergrund 12 auf, was das ästhetische Erscheinungsbild ebenfalls verbessert.

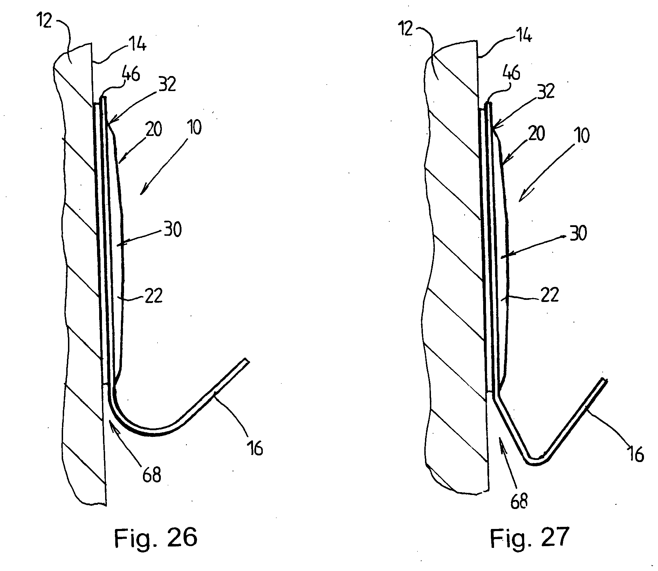

Die Saugnäpfe 10 in den Figuren 26 und 27 entsprechen im Wesentlichen den Saugnäpfen 10 in den Figuren 1 bis 6, jedoch sind die Hakenteile 16 anders geformt, um das Ablösen des Saugnapfs 10 vom Untergrund 12 zu erleichtern. Bei dem Saugnapf 10 in Fig. 23 ist der Hakenteil 16 V-förmig gebogen. Bei dem Saugnapf 10 in Fig. 23 ist der Hakenteil 16 gekrümmt. In beiden Fällen steht zudem der Hakenteil 16 nach unten über den Umfang 46 der Schnappscheibe 20 über, wodurch zwischen dem Untergrund 12 und dem Hakenteil 16 ein Spalt 68 gebildet wird, der sich nach oben zu verjüngt.

Der Saugnapf in Fig. 23 und 24 entspricht ebenfalls im Wesentlichen den Saugnäpfen 10 in den Figuren 1 bis 6. Ein Unterschied besteht jedoch darin, dass an Stelle des Hakenteils 16 am unteren Rand der Schnappscheibe 10 die beiden identisch geformten Halteteile 18 an zwei diametral entgegengesetzten Stellen am kreisförmigen Umfang 46 der Schnappscheibe 20 vorgesehen sind. Die Halteteile 18 stehen nach außen über den Umfang 46 über, wobei ihr freies Ende allgemein parallel zur Oberfläche 14 ausgerichtet ist. Das freie Ende weist jedoch einen Abstand von der Oberfläche 14 auf, so dass der hinter den Enden gebildete Freiraum zur Aufnahme von Teilen einer Halterung dienen kann, zum Beispiel von zwei parallelen Rundstäben 72 einer gebogenen Halterung 70 eines Korbs zur Aufnahme von Duschgel oder Shampoo. Wie in Fig. 23 dargestellt, liegt die Halterung 70 zweckmäßig an der Oberseite des Saugnapfs 10 bzw. der Schnappscheibe 20 auf dem Umfang 46 auf, wird dort jedoch nicht von einem Halteteil gehalten, damit nur in die beiden Halteteile 18 Momente eingeleitet werden.

Ein weiterer Unterschied besteht darin, dass der flachere kegelstumpfförmige Abschnitt 54 des Mittelteils 30 mit vier Paaren von eingeformten Prägelinien 74 versehen ist, die sich von der kreisförmigen Prägelinie 64 bis zu der kreisförmigen Prägelinie 62 erstrecken. Die jeweils benachbarten Prägelinien 74 divergieren dabei leicht, sind jedoch nicht radial ausgerichtet. Durch derartige Paare von Prägelinien 74 kann bei gleichbleibender Blechstärke die nach der Verformung in der Schnappscheibe 20 gespeicherte Energie vergrößert werden.

Beim Saugnapf 10 in Fig. 15 haben sowohl der Umfangsrandteil 32 und der Mittelteil 30 der Schnappscheibe 20 einen quadratischen Umriss mit gerundeten Ecken. Der Umfangsrandteil 32 umfasst einen umlaufenden ebenen Randabschnitt 76 sowie einen pyramidenstumpfförmigen Abschnitt 78 mit einem Neigungswinkel von 30 bis 40 Grad in Bezug zum Randabschnitt 76. Der Mittelteil 30 umfasst einen an den Abschnitt 78 angrenzenden flacheren pyramidenstumpfförmigen Abschnitt 80, dessen Neigungswinkel in Bezug zum Randabschnitt 76 weniger als 10 Grad beträgt, sowie einen allgemein ebenen mittigen Abschnitt 82, der parallel zum Randabschnitt 76 bzw. zur Oberfläche 14 des Untergrundes 12 ist. Zwischen den benachbarten Abschnitten 76, 78; 78, 80; 80, 82 sind jeweils eingeformte umlaufende Prägelinien 84, 86, 88 angeordnet. Vier weitere Prägelinien 90 erstrecken sich entlang der Diagonalen durch den flacheren pyramidenstumpfförmigen Abschnitt 80.

Bei dem Saugnapf 10 in den Figuren 8 und 9 besitzt die Schnappscheibe 20 einen allgemein rechteckigen Umriss mit einem gerundeten oberen und unteren Rand. Der Mittelteil 30 umfasst ein längliches mittleres Feld 92, das von vier zum Feld 92 hin konkav gekrümmten paarweise symmetrischen Prägelinien 94 begrenzt wird. Von jeder der vier Ecken des mittleren Feldes 92 erstreckt sich eine gerade Prägelinie 96 bis in die Nähe der benachbarten Ecke der Schnappscheibe 20. Der Umfangsrandteil 32 umfasst hier nur einen umlaufenden, zur Oberfläche 14 des Untergrundes 10 parallelen ebenen Randabschnitt 98.

Bei sämtlichen Saugnäpfen 10 bedeckt das Dichtungsmaterial 26 als durchgehende Schicht im Wesentlichen die gesamte Rückseite 24 der Schnappscheibe 20, und zwar abgesehen von einem schmalen ringförmigen Bereich, der an den Umfang 46 der Schnappscheibe 20 angrenzt, so dass dort bei Betrachtung des Saugnapfs 10 von vorne oder schräg von vorne das Dichtungsmaterial 26 nicht sichtbar ist.

Bei den Saugnäpfen 10 in den Figuren 4 bis 7, 10 bis 13, 16 und 17 sowie 23 und 24 weist die Schicht des Dichtungsmaterials 26 hinter der Rückseite des ebenen äußersten Randabschnitts 50 bzw. 76 des Umfangsrandteils 32 eine konstante Dicke auf. Hinter der Rückseite des angrenzenden Abschnitts 52 bzw. 78 des Umfangsrandteils 32 nimmt dann die Dicke des Dichtungsmaterials 26 bis zur Prägelinie 62 bzw. 86 zu, und nimmt dann von dort aus wieder bis zu der Prägelinie 64 bzw. 88 ab.

Das Maximum der Dicke befindet sich hinter dem von der Prägelinie 62 gebildeten Übergang zwischen dem verformbaren Mittelteil 30 und dem Umfangsrandteil 32. Das Minimum der Dicke befindet sich hinter der Mitte der Schnappscheibe 20 bzw. hinter dem mittigen Abschnitt 56.

Bei dem Saugnapf 10 in den Figuren 18 bis 22 nimmt die Dicke des Dichtungsmaterials 26 von außen nach innen ebenfalls zuerst zu und dann ab, wobei das Maximum der Dicke ebenfalls hinter dem Übergang zwischen dem verformbaren Mittelteil 30 und dem Umfangsrandteil 32 und das Minimum der Dicke in der Mitte der Schnappscheibe 20 liegt.

Bei dem Dichtungsmaterial 26 handelt es sich um ein elastisch verformbares Material, das relativ weich und nachgiebig ist und eine Shore-Härte C von weniger als 30, besser noch weniger als 20 besitzt, so dass es sich sehr gut an die Oberfläche 14 des Untergrundes 12 anschmiegen bzw. anpassen kann. Beispiele für geeignete Dichtungsmaterialien 26 mit einer solchen Shore-Härte C sind Silikon, Elastomere, Gummi- oder Kautschukmaterialien, Weich-PVC oder thermoplastische Elastomere, von denen diejenigen bevorzugt werden, die sich durch Spritzgießen direkt an der Rückseite 24 der metallischen Schnappscheibe 20 anformen lassen. Alternativ kann jedoch das Dichtungsmaterial 26 auch vorgeformt und dann an der Rückseite 24 der Schnappscheibe 20 festgeklebt werden.

Beim Formen des Dichtungsmaterials 26 wird dessen Rückseite 36 so gestaltet, dass sie im Ruhezustand der Schnappscheibe 20 hinter dem Umfangsrandteil 32 eine erhöhte ringförmige ebene Dichtfläche 100 zum Anlegen gegen die Oberfläche 14 des Untergrunds 12 und hinter dem Mittelteil 30 eine flache konkave Vertiefung 102 aufweist, die von der Dichtfläche 100 umgeben ist, wie zum Beispiel in Fig. 4, 10 und 12 dargestellt. Im Verformungszustand der Schnappscheibe 20 ist die Rückseite 36 vollständig eben und parallel zur Oberfläche 14, wie z.B. in Fig. 5, 11 und 13 dargestellt.

Bei allen Saugnäpfen 10 sind die Form und die Dicke des Dichtungsmaterials 26 so gewählt, dass dieses im Ruhezustand in einem von der Dichtfläche 100 umgebenen Bereich hinter dem verformbaren Mittelteil 32 der Schnappscheibe 20 so weit von der Oberfläche 14 des Untergrunds 12 abgehoben ist, dass sich der Mittelteil 30 ohne eine spürbare Kompression des Dichtungsmaterials 26 in den Verformungszustand verformen lässt, in dem die Sicht- oder Vorderseite 22 konkav gewölbt und die Rückseite des Dichtungsmaterials 26 eben ist.

Als bevorzugtes Dichtungsmaterial 26 werden Haftschmelzklebstoffe verwendet, da diese nicht nur durch Haftreibungskräfte, sondern zusätzlich durch Klebkräfte am Untergrund 12 haften. Bei Haftschmelzklebstoffen steigen die Klebkräfte mit zunehmender Flächenpressung, so dass durch eine hohe Andruckkraft in Verbindung mit einer kleinen Anlagefläche eine Maximierung der Klebkräfte und damit der Haftung am Untergrund 12 ermöglicht wird. Zudem trägt eine hohe Flächenpressung auch zu einer guten Dichtwirkung bei. Bevorzugt werden Haftschmelzklebstoffe mit geringer Klebkraft (low tack) verwendet, die sich von den meisten Untergründen rückstandsfrei wieder ablösen lassen und damit trotz der Verklebung mit dem Untergrund eine mehrmalige Befestigung des Saugnapfs 10 gestatten. Am besten sind thermoplastische Haftschmelzklebstoffe (hot melt PSAs) geeignet, weil diese bei relativ niedrigem Druck und moderater Temperatur geformt und zugleich mit der Rückseite 24 der Schnappscheibe 20 verbunden werden können, zum Beispiel durch Spritzgießen. Beispiele derartiger Haftschmelzklebstoffe sind unter der Bezeichnung "Tecbond 2507 FS", "Removable Credit Card Glue" bzw. "Low Tack Dot Shot Pro" von Gluegunsdirect.com, unter der Bezeichnung "SuperDots Easy Tak" von Klebeshop24.de, unter der Bezeichnung "Removable Glue Dots" von Glue Dots International oder unter der Bezeichnung "tesa TACK transparent" von TESA SE erhältlich. Um die Haftung des Haftschmelzklebstoffs an der Rückseite 24 der Schnappscheibe 20 zu verbessern, kann diese mit einem Primer oder Haftvermittler beschichtet sein.

Einige Haftschmelzklebstoffe neigen allerdings nach der Anbringung des Saugnapfs 10 am Untergrund 12 zum Kriechen, zum Beispiel weil die Schnappscheibe 20 durch den Unterdruck im Hohlraum 40 gegen den Untergrund 12 angepresst und somit das Dichtungsmaterial 26 zwischen der Schnappscheibe 20 und dem Untergrund 12 im Bereich der Dichtfläche 100 auf Druck belastet wird. Dies bewirkt zwar eine noch bessere Abdichtung des Hohlraums 40 aber auch eine langsame irreversible Verformung des Dichtungsmaterials 26, so dass sich die Schnappscheibe 20 nach einiger Zeit nicht mehr in den Verformungszustand verformen lässt. Dies erschwert sowohl das Abnehmen des Saugnapfs 10 vom Untergrund 12 und verhindert auch ein erneutes Anbringen am Untergrund 12.

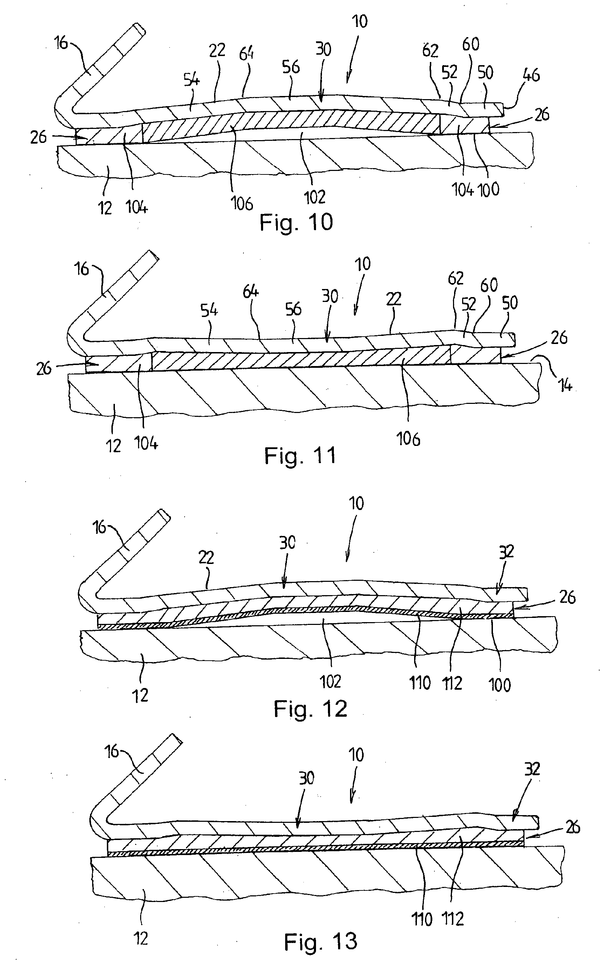

Aus diesem Grund umfasst das Dichtungsmaterial 26 bei dem Saugnapf 10 in den Figuren 10 und 11 einen Haftschmelzklebstoff 104, der einen ringförmigen Bereich hinter dem Umfangrandteil 32 bedeckt und die Dichtfläche 100 bildet, sowie ein anderes, nicht zum Kriechen neigendes elastisch verformbares Material 106, das die Rückseite des Mittelteils 30 bedeckt und sich im Verformungszustand eng an die Oberfläche 14 anschmiegen kann, wie z.B. ein Silikon, Gummi- oder Kautschukmaterial oder ein thermoplastisches Elastomer (TPE).

Bei dem Saugnapf 10 in den Figuren 12 und 13 umfasst das Dichtungsmaterial 26 eine Mikrosaugnapffolie 110, die sich über die gesamte dem Untergrund 12 zugewandte Rückseite 36 des Dichtungsmaterials 26 erstreckt, sowie einen elastischen Heißschmelzklebstoff 112, der die Folie 110 luftdicht und fest mit der Rückseite 24 der Schnappscheibe 20 verbindet.

Im Folgenden werden die Anbringung, die Funktionsweise und das Ablösen der erfindungsgemäßen Saugnäpfe 10 an zwei Beispielen beschrieben: Wie zuvor angegeben, kann der Saugnapf 10 zur Befestigung im Ruhezustand der Schnappscheibe 20 mit dem Dichtungsmaterial 26 gegen den Untergrund 10 angelegt werden, wie beispielhaft in Fig. 4 dargestellt. Wenn dann eine Druck- oder Anpresskraft auf die Mitte der konvex gewölbten Sicht- oder Vorderseite 22 der Schnappscheibe 20 ausgeübt wird, die einen bestimmten Schwellenwert übersteigt, bewegt sich der Mittelteil 30 der Schnappscheibe 20 unter schlagartiger Verformung in Richtung des Untergrundes 10, bis er den instabilen oder metastabilen Verformungszustand erreicht, in dem die Sicht- oder Vorderseite 22 im Bereich des Mittelteils 30 konkav gewölbt ist, wie beispielhaft in Fig. 5 dargestellt. Dabei wird Luft zwischen dem Dichtungsmaterial 26 und dem Untergrund 12 in die Umgebung verdrängt. Beim Erreichen des Verformungszustands legt sich das Dichtungsmaterial 26 hinter dem Mittelteil 30 mit seiner ebenen Rückseite 36 gegen die ebene Oberfläche 14 an, wobei die Luft vollständig verdrängt wird. Wenn die Anpresskraft anschließend entlastet wird, verformt sich die Schnappscheibe 20 selbsttätig in Richtung des Ruhezustands zurück, wobei hinter dem Mittelteil 30 der Hohlraum 40 gebildet und im Hohlraum 40 ein Unterdruck erzeugt wird.

Alternativ kann der Saugnapf 10 jedoch auch mit dem Daumen und dem Zeigefinger einer Hand ergriffen werden, wobei der Daumen mittig gegen die Sicht- oder Vorderseite 22 der Schnappscheibe 20 anliegt und der Zeigefinger den Hakenteil 16 hintergreift, wie in Fig. 25 dargestellt. Danach wird der Saugnapf 10 bzw. die Schnappscheibe 20 mit einem zum Hakenteil 16 diametral entgegengesetzten Umfangsrandabschnitt gegen den Untergrund 12 angelegt und eine Druckkraft auf die Mitte der Sicht- oder Vorderseite 22 ausgeübt, um den Mittelteil 30 durch einen allgemein ebenen bistabilen Zwischenzustand in den instabilen oder metastabilen Verformungszustand zu verformen. Sobald die Schnappscheibe 20 in den Verformungszustand geschnellt und die Rückseite 36 des Dichtungsmaterials 24 eben ist, wird die Neigung des Saugnapfs 10 in Bezug zum Untergrund 12 reduziert, bis das Dichtungsmaterial 26 ganzflächig gegen die Oberfläche 14 anliegt. Wenn die Druckkraft anschließend entlastet wird, verformt sich die Schnappscheibe 20 selbsttätig in Richtung des Ruhezustands zurück, wobei hinter dem Mittelteil 30 wieder ein Unterdruck erzeugt wird.

Im Gebrauch kann die Schnappscheibe 20 entweder den Ruhezustand oder einen Zwischenzustand einnehmen, je nachdem wie groß die Blechdicke der Schnappscheibe 20 im Verhältnis zum Flächeninhalt des Mittelteils 30 ist. Wenn dieses Verhältnis einen bestimmten Schwellenwert übersteigt, dann schnellt die Schnappscheibe 20 bei Kraftentlastung aus dem instabilen Verformungszustand sofort in den Ruhezustand zurück. Unterhalb des Schwellenwerts bleibt die Schnappscheibe 20 in einem metastabilen Verformungszustand und kehrt erst in den stabilen Ruhezustand zurück, wenn eine kleine Luftmenge in den Hohlraum 40 eingedrungen ist.

Zum Ablösen des Saugnapfs 10 wird dieser einseitig vom Untergrund 12 abgehoben. Dazu kann der gekrümmte Zeigefinger einer Hand am Hakenteil 16 eingehakt und eine vom Untergrund 12 weg gerichtete Zugkraft auf den Hakenteil 16 ausgeübt werden, um am tiefsten Punkt der Dichtfläche 100 Luft in den Hohlraum 40 einströmen zu lassen und das Dichtungsmaterial 26 allmählich vom Untergrund 12 zu lösen. Wenn zwischen dem Hakenteil 16 und der Oberfläche des Untergrundes 12 ein Spalt 68 vorhanden ist, wie bei den Saugnäpfen 10 in den Figuren 26 und 27, kann der gekrümmte Zeigefinger alternativ auch in den Spalt 68 eingeführt werden, um den Saugnapf 10 einseitig vom Untergrund 12 weg zu hebeln. In beiden Fällen kann das Ablösen erleichtert werden, indem mit dem Daumen eine Druckkraft mittig auf die Sicht- oder Vorderseite 22 der Schnappscheibe 20 ausgeübt wird, um den Mittelteil 30 in den Verformungszustand zu verformen und durch Beseitigung des Hohlraums 40 einen Druckausgleich zwischen der Sicht- oder Vorderseite 22 und der Rückseite der Schnappscheibe 20 herzustellen, bevor oder während eine Kraft auf den Hakenteil 16 ausgeübt wird.

## Patentansprüche

1. Saugnapf (10) zur lösbaren Befestigung an einem Untergrund (12), wobei der Saugnapf (10) ein nachgiebiges Dichtungsmaterial (26) zum Anlegen gegen den Untergrund (12) und einen elastisch verformbaren Betätigungsteil zum Anpressen gegen den Untergrund (12) umfasst und eine elastische Rückverformung des Betätigungsteils zur Erzeugung eines Unterdrucks zwischen dem Saugnapf (10) und dem Untergrund (12) ausnutzt, **dadurch gekennzeichnet, dass** der Betätigungsteil eine Schnappscheibe (20) umfasst, deren vom Dichtungsmaterial (26) abgewandte Vorder- oder Sichtseite (22) in einem stabilen Ruhezustand mindestens teilweise konvex gewölbt ist, die sich durch eine auf die Vorder- oder Sichtseite (22) ausgeübte Druckkraft mindestens teilweise in einen metastabilen oder instabilen Verformungszustand verformen lässt, in dem die Vorder- oder Sichtseite (22) mindestens teilweise konkav gewölbt ist, und die sich bei Entlastung der Druckkraft selbsttätig in Richtung des Ruhezustands zurückverformt.

2. Saugnapf nach Anspruch 1, **dadurch gekennzeichnet, dass** die Schnappscheibe (20) aus einem gestanzten und umgeformten nicht-rostenden oder beschichteten Federstahlblech besteht.

3. Saugnapf nach Anspruch 2, **dadurch gekennzeichnet, dass** das Federstahlblech eine Dicke von mehr als 0,2 mm und weniger als 0,5 mm besitzt.

4. Saugnapf nach einem der vorangehenden Ansprüche, **dadurch gekennzeichnet, dass** die Schnappscheibe (20) das Dichtungsmaterial (26) vollständig bedeckt.

5. Saugnapf nach einem der vorangehenden Ansprüche, **dadurch gekennzeichnet, dass** eine maximale Hubhöhe der Schnappscheibe (20) bei der Verformung zwischen dem stabilen Ruhezustand und dem instabilen oder metastabilen Verformungszustand weniger als 3 mm beträgt.

6. Saugnapf nach einem der vorangehenden Ansprüche, **dadurch gekennzeichnet, dass** die Schnappscheibe (20) einen verformbaren Mittelteil (30) und einen fest mit dem Mittelteil (30) verbundenen, den Mittelteil (30) umgebenden Umfangsrandteil (32) umfasst, dass sich der Mittelteil (30) zwischen dem metastabilen oder instabilen Verformungszustand und dem Ruhezustand verformen lässt und dass sich der Umfangsrandteil (32) bei der Verformung des Mittelteils (30) nicht oder nur unwesentlich verformt.

7. Saugnapf nach Anspruch 6, **dadurch gekennzeichnet, dass** ein maximaler Neigungswinkel des Mittelteils (30) in Bezug zum Untergrund (12) weniger als 10 Grad beträgt.

8. Saugnapf nach einem der vorangehenden Ansprüche, **dadurch gekennzeichnet, dass** auf eine zur Vorder- oder Sichtseite (22) entgegengesetzten Rückseite (24) der Schnappscheibe (20) eine durchgehende Schicht Dichtungsmaterial (26) aufgebracht ist.

9. Saugnapf nach Anspruch 8, **dadurch gekennzeichnet, dass** eine Schichtdicke der Dichtungsmaterialschicht hinter einer Mitte der Schnappscheibe (20) kleiner ist als hinter einem Umfangsrandteil (32) der Schnappscheibe (20).

10. Saugnapf nach Anspruch 8 oder 9, **dadurch gekennzeichnet, dass** eine Schichtdicke der Dichtungsmaterialschicht von einem äußeren Umfang (46) oder Umfangsrandteil (32) zu einer Mitte der Schnappscheibe (20) hin zuerst zunimmt und dann abnimmt.

11. Saugnapf nach einem der Ansprüche 8 bis 10, **dadurch gekennzeichnet, dass** die Schichtdicke der Dichtungsmaterialschicht weniger als 2 mm und mehr als 0,5 mm beträgt.

12. Saugnapf nach einem der vorangehenden Ansprüche, **dadurch gekennzeichnet, dass** eine von der Schnappscheibe (20) abgewandte Rückseite (36) des Dichtungsmaterials (26) im Ruhezustand der Schnappscheibe (20) eine erhabene ebene ringförmige Dichtfläche (100) zum Anlegen gegen den Untergrund (12) und eine von der Dichtfläche (100) umgebene flache konkave Vertiefung (102) aufweist, während die Rückseite (36) im Verformungszustand der Schnappscheibe (20) eben oder nahezu vollständig eben ist.

13. Saugnapf nach Anspruch 12, **dadurch gekennzeichnet, dass** die flache konkave Vertiefung (102) dasselbe Volumen besitzt wie ein Hohlraum (40), der sich bei der Rückkehr der verformten Schnappscheibe (20) in den Ruhezustand zwischen dem Dichtungsmaterial (26) und dem Untergrund (12) bildet.

14. Saugnapf nach Anspruch 12 oder 13, **dadurch gekennzeichnet, dass** die Tiefe der flachen konkaven Vertiefung (102) in Bezug zu der umgebenden Dichtfläche (100) größer als die Hälfte eines Bewegungswegs einer Mitte der Schnappscheibe (20) bei der Verformung aus dem Ruhezustand in den Verformungszustand und kleiner oder gleich dem Bewegungsweg ist.

15. Saugnapf nach einem der vorangehenden Ansprüche, **dadurch gekennzeichnet, dass** das Dichtungsmaterial (26) mindestens teilweise aus einem Haftklebstoff (PSA) besteht.

## Claims

1. A suction cup (10) for removably fastening to a substrate (12), wherein the suction cup (10) comprises a resilient sealing material (26) for applying to the substrate (12) and an elastically deformable actuating portion for pressing against the substrate (12), and utilizes an elastic recovery of the actuating portion in order to generate a negative pressure between the suction cup (10) and the substrate (12), **characterized in that** the actuating portion comprises a snap dome (20), whose front or visible side (22) facing away from the sealing material (26) is at least partially convexly curved in a stable rest state, which can be at least partially deformed by a compressive force exerted onto the front or visible side (22) into a metastable or unstable deformation state, where its front or visible side (22) is at least partially concavely curved, and which recovers automatically in the direction of the rest state when the compressive force is relieved.

2. The suction cup according to claim 1, **characterized in that** the snap dome (20) consists of a punched and formed stainless or coated spring steel sheet.

3. The suction cup according to claim 2, **characterized in that** the spring steel sheet has a thickness of more than 0.2 mm and less than 0.5 mm.

4. The suction cup according to one of the preceding claims, **characterized in that** the snap dome (20) completely covers the sealing material (26).

5. The suction cup according to one of the preceding claims, **characterized in that** a maximum stroke of the snap dome (20) during the deformation between the stable rest state and the unstable or metastable deformation state is less than 3 mm.

6. The suction cup according to one of the preceding claims, **characterized in that** the snap dome (20) has a deformable central portion (30) and a peripheral rim portion (32) fixedly connected to the central portion (30) and surrounding the central portion (30), **in that** the central portion (30) can be deformed between the metastable or unstable deformation state and the rest state, and **in that** the peripheral rim portion (32) is not deformed or is only insignificantly deformed during the deformation of the central portion (30) .

7. The suction cup according to claim 6, **characterized in that** a maximum angle of inclination of the central portion (30) with respect to the substrate (12) is less than 10 degrees.

8. The suction cup according to one of the preceding claims, **characterized in that** a continuous layer of sealing material (26) is applied to a rear side (24) of the snap dome (20) opposite from the front or visible side (22).

9. The suction cup according to claim 8, **characterized in that** a film thickness of the layer of sealing material behind a center of the snap dome (20) is less than behind a peripheral rim portion (32) of the snap dome (20).

10. The suction cup according to claim 8 or 9, **characterized in that** a film thickness of the layer of sealing material first increases and then decreases from an outer circumference (46) or peripheral rim portion (32) towards a center of the snap dome (20).

11. The suction cup according to one of claims 8 to 10, **characterized in that** the film thickness of the layer of sealing material is less than 2 mm and more than 0.5 mm.

12. The suction cup according to one of the preceding claims, **characterized in that** a rear face (36) of the sealing material (26) opposite from the snap dome (20) in the rest state of the snap dome (20) has a raised flat annular sealing surface (100) for application to the substrate (12) and a shallow concave depression (102) surrounded by the sealing surface (100), whereas in the deformation state of the snap dome (20) the rear face (36) is flat or almost completely flat.

13. The suction cup according to claim 12, **characterized in that** the shallow concave depression (102) has the same volume as a cavity (40) that forms between the sealing material (26) and the substrate (12) during the return of the deformed snap dome (20) into the rest state.

14. The suction cup according to claim 12 or 13, **characterized in that** the depth of the shallow concave depression (102) in relation to the surrounding sealing surface (100) is larger than half of a stroke of a center of the snap dome (20) during the deformation from the rest state into the deformation state and less than or equal to the stroke.

15. The suction cup according to one of the preceding claims, **characterized in that** the sealing material (26) is made at least partially from a pressure-sensitive adhesive (PSA).

## Revendications

1. Ventouse (10) destinée à être fixée de manière libérable à un substrat (12), la ventouse (10) comprenant un matériau d'étanchéité élastique (26) destiné à être appliqué contre le substrat (12) et un élément d'actionnement déformable élastiquement destiné à être pressé contre le substrat (12) et utilisant le retour de forme élastique de l'élément d'actionnement pour générer une pression négative entre la ventouse (10) et le substrat (12), **caractérisée en ce que** l'élément d'actionnement comprend un disque à déclic (20) dont la face avant ou visible (22), opposée au matériau d'étanchéité (26), est au moins partiellement incurvée de manière convexe dans un état de repos stable, lequel disque à déclic peut se déformer au moins partiellement, sous l'action d'une force de pression exercée sur la face avant ou visible (22), pour venir dans un état de déformation métastable ou instable dans lequel la face avant ou visible (22) est au moins partiellement incurvée de manière concave et se déforme automatiquement en direction de l'état de repos lors du relâchement de la force de pression.

2. Ventouse selon la revendication 1, **caractérisée en ce que** le disque à déclic (20) est constitué d'une tôle d'acier à ressort estampée et mise en forme, inoxydable ou pourvue d'un revêtement.

3. Ventouse selon la revendication 2, **caractérisée en ce que** la tôle d'acier à ressort a une épaisseur de plus de 0,2 mm et de moins de 0,5 mm.

4. Ventouse selon l'une des revendications précédentes, **caractérisée en ce que** le disque à déclic (20) recouvre entièrement le matériau d'étanchéité (26) .

5. Ventouse selon l'une des revendications précédentes, **caractérisée en ce que** la hauteur de course maximum du disque à déclic (20) lors de la déformation entre l'état de repos stable et l'état de déformation instable ou métastable est inférieure à 3 mm.

6. Ventouse selon l'une des revendications précédentes, **caractérisée en ce que** le disque à déclic (20) comprend une partie centrale déformable (30) et une partie formant bord périphérique (32) reliée à la partie centrale (30) et entourant la partie centrale (30), **en ce que** la partie centrale (30) peut se déformer entre l'état de déformation métastable ou instable et l'état de repos et **en ce que** la partie formant bord périphérique (32) n'est pas ou n'est que légèrement déformée lors de la déformation de la partie centrale (30).

7. Ventouse selon la revendication 6, **caractérisée en ce qu'**un angle d'inclinaison maximal de la partie centrale (30) par rapport au substrat (12) est inférieur à 10 degrés.

8. Ventouse selon l'une des revendications précédentes, **caractérisée en ce qu'**une couche de matériau d'étanchéité continue (26) est appliquée sur la face arrière (24) du disque à déclic (20), qui est opposée à la face avant ou visible (22).

9. Ventouse selon la revendication 8, **caractérisée en ce que** l'épaisseur de la couche de matériau d'étanchéité en arrière d'un centre du disque à déclic (20) est inférieure à celle en arrière d'une partie formant bord périphérique (32) du disque à déclic (20).

10. Ventouse selon la revendication 8 ou 9, **caractérisée en ce que** l'épaisseur de la couche de matériau d'étanchéité augmente d'abord depuis une périphérie extérieure (46) ou d'une partie formant bord périphérique (32) vers le centre du disque à déclic (20), puis diminue.

11. Ventouse selon l'une des revendications 8 à 10, **caractérisée en ce que** l'épaisseur de la couche de matériau d'étanchéité est inférieure à 2 mm et supérieure à 0,5 mm.

12. Ventouse selon l'une des revendications précédentes, **caractérisée en ce qu'**une face arrière (36) du matériau d'étanchéité (26), qui est opposée au disque à déclic (20), comporte, lorsque le disque à déclic (20) est à l'état de repos, une surface d'étanchéité annulaire plane surélevée (100) destiné à être appliqué contre le substrat (12) et une dépression concave peu profonde (102) entourée par la surface d'étanchéité (100), tandis que la face arrière (36) est plate ou presque complètement plate lorsque le disque à déclic (20) est à l'état de déformation.

13. Ventouse selon la revendication 12, **caractérisée en ce que** la dépression concave peu profonde (102) a le même volume qu'une cavité (40) qui se forme entre le matériau d'étanchéité (26) et le substrat (12) lorsque le disque à déclic (20) déformé retourne à l'état de repos.

14. Ventouse selon la revendication 12 ou 13, **caractérisée en ce que** la profondeur de la dépression concave peu profonde (102) par rapport à la surface d'étanchéité environnante (100) est supérieure à la moitié du chemin de déplacement du centre du disque à déclic (20) pendant la déformation de l'état de repos à l'état de déformation et est inférieure ou égale au chemin de déplacement.

15. Ventouse selon l'une des revendications précédentes, **caractérisée en ce que** le matériau d'étanchéité (26) comprend au moins partiellement un adhésif sensible à la pression (PSA).
